# EUROPÄISCHE PATENTSCHRIFT

(11) **EP 3 805 713 B1**
(45) Veröffentlichungstag und Bekanntmachung des Hinweises auf die Patenterteilung: **28.08.2024**
(21) Anmeldenummer: 20000365.5
(22) Anmeldetag: 08.10.2020
(51) Int. Cl.: G01G 13/02, B65G 53/04, B65G 53/60

(54) **FÖRDERGERÄT FÜR DEN EINSATZ IM KUNSTSTOFFBEREICH**
TRANSPORT DEVICE FOR USE IN PLASTICS
APPAREIL CONVOYEUR POUR MATIÈRE PLASTIQUE

(30) Priorität: 11.10.2019 DE 102019007134; 17.07.2020 DE 102020004386
(43) Veröffentlichungstag der Anmeldung: 14.04.2021
(73) Patentinhaber: Motan Holding GmbH, 78467 Konstanz (DE)
(72) Erfinder: Wolfgang, Karl-Martin, 88299 Leutkirch (DE); Engel, Tobias, 88316 Isny (DE)
(74) Vertreter: Kohl, Karl-Heinz

(56) Entgegenhaltungen:
- EP-A1- 1 505 016
- EP-A1- 3 293 131

## Beschreibung

Die Erfindung betrifft ein Fördergerät für den Einsatz im Kunststoffbereich nach dem Oberbegriff des Anspruches 1.

Das Fördergerät ermöglicht eine gravimetrische Durchsatzerfassung von zu förderndem Gut, das Granulat, Pulver, Mahlgut, Flakes und dergleichen sein kann. Das Fördergerät wiegt mit Hilfe einer Wägezelle jede Charge des Materials, bevor es das Fördergerät verlässt und beispielsweise einer Verarbeitungsmaschine oder einem Trockentrichter zugeführt wird. Die Wägezelle ist an einem Gestell befestigt, an dem auch Kupplungen für eine Vakuumleitung und eine Förder- bzw. Materialleitung gehalten sind. Die Kupplungen verbinden die Abscheidereinheit mit dem Gestell. Während des Fördervorganges wirken auf die Vakuumleitung sowie auf die Förderleitung Kräfte, welche auf die Abscheidereinheit übertragen werden und das Wiegeergebnis beeinflussen.

Der Erfindung liegt die Aufgabe zugrunde, das gattungsgemäße Fördergerät so auszubilden, dass in konstruktiv einfacher Weise das Wiegeergebnis nicht oder in nur vernachlässigbar geringem Maße durch den Fördervorgang beeinflusst wird.

Diese Aufgabe wird beim gattungsgemäßen Fördergerät erfindungsgemäß mit den kennzeichnenden Merkmalen des Anspruches 1 gelöst.

Beim erfindungsgemäßen Fördergerät sind die erste und/oder die zweite Kupplung so ausgebildet, dass das mit dem Gestell und das mit der Abscheidereinheit verbundene Kupplungsteil keine Berührung miteinander haben. Die Kupplungsteile können dadurch aus formstabilen Teilen, wie Rohrstücken, gebildet sein, die einfach und zuverlässig an der Abscheidereinheit und am Gestell angebracht werden können. Da die Kupplungsteile keinen Kontakt miteinander haben, werden beim Fördervorgang, wenn das Fördergerät mit dem zu fördernden Gut gefüllt wird, keine Kräfte auf die Abscheidereinheit ausgeübt, die über die Vakuumleitung bzw. über die Förderleitung wirken könnten.

Da die beiden Kupplungsteile keinen Kontakt miteinander haben, entsteht zwischen beiden Kupplungsteilen ein offener Bereich, der durch das Dichtelement abgedichtet werden kann. Daher ist eine zuverlässige Förderung des Gutes in das Fördergerät sichergestellt.

Die beiden Kupplungsteile können in vorteilhafter Weise berührungslos aneinander anschließen. Hierunter ist zu verstehen, dass die beiden Kupplungsteile so gestaltet sein können, dass sie, quer zu ihrer Achse gesehen, aneinander anschließen oder einander überlappen.

Die Kupplungsteile sind bevorzugt zylindrische Rohrstücke, die kostengünstige Bauteile sind und eine zuverlässige Förderung des Gutes gewährleisten.

Um eine zuverlässige Förderung zu gewährleisten, sind die beiden Kupplungsteile der Kupplungen vorteilhaft fluchtend zueinander angeordnet.

Die beiden Kupplungsteile zumindest der einen Kupplung, vorzugsweise auch beider Kupplungen, können so ausgebildet und angeordnet sein, dass sie axialen Abstand voneinander haben. Um eine Förderung zu ermöglichen, ist in diesem Falle der Abstand zwischen den Kupplungsteilen durch eine Buchse überbrückt, die auf wenigstens einem der Kupplungsteile vorgesehen ist.

Das Dichtelement ist in bevorzugter Ausführungsform ein flacher Dichtring. Er nimmt nur wenig Raum in Anspruch und stellt dennoch eine zuverlässige Abdichtung sicher.

Das Dichtelement besteht vorteilhaft aus einem weichen Material, so dass das Dichtelement zur Gewährleistung einer zuverlässigen Abdichtung einfach in seiner Einbaulage bewegt bzw. elastisch verformt werden kann.

Als bevorzugtes Material eignet sich ein weicher Kunststoff, der eine Shorehärte A von etwa 25 bis 40 aufweist. Ein solches Dichtelement hat zum einen eine ausreichende Formstabilität, zum anderen ist es zur Erfüllung seiner Abdichtfunktion ausreichend beweglich.

Als bevorzugter Kunststoff eignet sich EPDM mit einer Shorehärte A von etwa 25 bis 40.

Um das Dichtelement zuverlässig am Fördergerät zu sichern, greift es in vorteilhafter Weise mit seinem radial inneren Rand in eine Ringnut des dem Abscheiderbehälter bzw. dem Gestell zugeordneten Kupplungsteiles ein. In der Ringnut kann das Dichtelement einfach und sicher gehalten werden.

Die Ringnut ist in vorteilhafter Weise an der Außenseite einer Buchse vorgesehen, die auf dem jeweiligen Kupplungsteil befestigt ist. Die Buchse kann eine ausreichend große Wandstärke haben, um die Ringnut für das Dichtelement vorzusehen.

Damit das Dichtelement zur Erfüllung seiner Dichtfunktion ausreichend Bewegungsspielraum hat, ist es derart am jeweiligen Kupplungsteil montiert, dass es über mehr als seine halbe radiale Breite aus der Ringnut vorsteht. Dieser überstehende Teil des Dichtelementes ermöglicht die zur Dichtfunktion notwendige Beweglichkeit des Dichtelementes.

Damit das Dichtelement trotz seiner flachen ringförmigen Ausbildung wenig Einbauraum benötigt, ist es so eingebaut, dass es in einer Radialebene des jeweiligen Kupplungsteiles liegt.

Das Dichtelement ist erfindungsgemäß so eingebaut, dass es in einer Freigabe- bzw. Ruhestellung Abstand von einer Dichtfläche hat. In dieser Ruhestellung ist der Innenraum der jeweiligen Kupplung über einen entsprechenden Spalt mit der Umgebung verbunden. Solange ein Fördervorgang nicht stattfindet, ist eine Abdichtung der Kupplungen gegen die Umgebung nicht erforderlich.

Sobald ein Fördervorgang gestartet wird, wird das Dichtelement durch den in den Kupplungen wirkenden Unterdruck aufgrund der Saugwirkung schlagartig aus seiner Freigabe/Ruhestellung in seine Dichtstellung verstellt, in der es an der jeweiligen Dichtfläche dichtend anliegt. Aufgrund der Vakuumförderung wirkt auf den aus der Ringnut vorstehenden Teil des Dichtelementes eine Axialkraft, die dazu führt, dass das Dichtelement aus der Freigabe/Ruhestellung in die Dichtstellung verstellt wird.

In der Freigabe/Ruhestellung hat das Dichtelement Abstand von der Dichtfläche. Dadurch wird zwischen dem Dichtelement und der Dichtfläche ein Durchlass gebildet, der den Innenraum der Kupplung mit der Umgebung verbindet. Wird die Vakuumförderung gestartet, entsteht durch diesen Zwischenraum eine Luftströmung von der Umgebung in die Kupplung, wodurch in vorteilhafter Weise erreicht wird, dass sich eventuell in diesem Durchlassbereich befindliche Verunreinigungen oder Gutteilchen weggesaugt werden.

Sobald der Fördervorgang abgeschlossen ist und die Vakuumquelle abgeschaltet wird, kehrt das Dichtelement selbsttätig aus der Dichtstellung in die Freigabe/Ruhestellung zurück.

Das Dichtelement kann auch als kegelscheibenförmiger Ring ausgebildet sein, der in vorteilhafter Weise an einem auf dem einen Kupplungsteil sitzenden Haltering vorgesehen ist. Das kegelscheibenförmige Dichtelement liegt an einer Dichtfläche einer Buchse dichtend an, die auf dem anderen Kupplungsteil sitzt und axial über dieses Kupplungsteil vorsteht.

Das kegelscheibenförmige Dichtelement besteht vorteilhaft aus einem weichen Kunststoff, aus EPDM oder einem anderen elastischen Dichtmaterial mit einer Shorehärte A von nur etwa 25 bis 40.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Seitenansicht ein erfindungsgemäßes Fördergerät,
- Fig. 2: in perspektivischer und vergrößerter Darstellung einen Teil des erfindungsgemäßen Fördergerätes gemäß Fig. 1,
- Fig. 3: in vergrößerter Darstellung den oberen Teil des erfindungsgemäßen Fördergerätes mit dem Verlauf der Luftströmung beim Befüllvorgang,
- Fig. 4: in vergrößerter Darstellung eine Kupplung des erfindungsgemäßen Fördergerätes mit einem Dichtelement in Freigabe/Ruhestellung und in Dichtstellung,
- Fig. 5: in Seitenansicht eine zweite Ausführungsform eines erfindungsgemäßen Fördergerätes,
- Fig. 6: in perspektivischer und vergrößerter Darstellung einen Teil des Fördergerätes gemäß Fig.5,
- Fig. 7: in vergrößerter Darstellung und im Schnitt zwei übereinander angeordnete Kupplungen, über die eine Saugeinheit sowie ein Vorratsbehälter für zu förderndes Gut angeschlossen werden können,
- Fig. 8: in vergrößerter Darstellung und im Schnitt die zum Anschluss des Vorratsbehälters vorgesehene Kupplung des erfindungsgemäßen Fördergerätes gemäß Fig. 5.

Das Fördergerät dient dazu, aus einem (nicht dargestellten) Vorratsbehälter, wie einem Silo und dergleichen, Schüttgut in abgewogener Menge einer (nicht dargestellten) Verarbeitungsmaschine zuzuführen. Unter Schüttgut sind Materialien zu verstehen, die mittels einer Saug(Vakuum)-Förderung vom Vorratsbehälter aus transportiert werden können. In der Regel ist ein solches Schüttgut als Granulat ausgebildet. Schüttgut kann auch Pulver, Mahlgut, Flakes und dergleichen sein. Vorteilhaft besteht das Schüttgut aus Kunststoff, der in der Verarbeitungsmaschine zum jeweiligen Produkt verarbeitet wird, wie beispielsweise Kunststoffrohren, Kunststoffbehältern und dergleichen.

Das Fördergerät hat eine Abscheidereinheit 1, die in bekannter Weise ausgebildet ist und darum nur kurz erläutert wird.

Die Abscheidereinheit 1 hängt an einer Wägezelle 2, die an einem Gestell 3 gehalten ist.

Die Abscheidereinheit 1 hat ein Gehäuse 4, das vorteilhaft aus aufeinandergesetzten Gehäuseteilen 4a bis 4d besteht.

Der obere Gehäuseteil 4a hat einen Kupplungsanschluss 5a, der Teil einer Kupplung 5 ist. Über die Kupplung 5 ist die Abscheidereinheit 1 mit einer (nicht dargestellten) Saugeinheit verbunden.

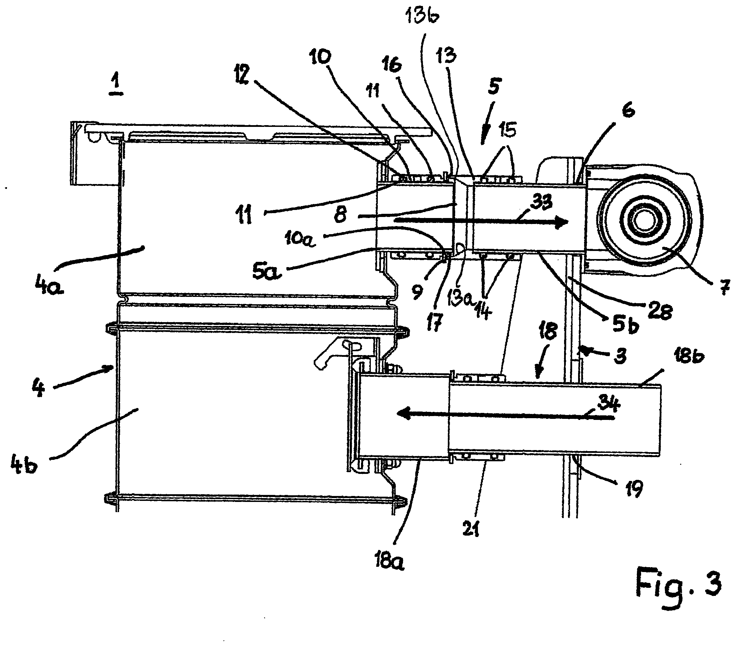

Der Kupplungsanschluss 5a ist ein radial vom Gehäuseteil 4 abstehender Rohrstutzen, dem ein am Gestell 3 gehaltener Rohrstutzen 5b zugeordnet ist (Fig. 3), der axialen Abstand vom Kupplungsanschluss 5a hat. Beide Kupplungsanschlüsse 5a, 5b haben vorzugsweise gleichen Innendurchmesser, vorteilhaft auch gleichen Außendurchmesser, und liegen in Achsrichtung fluchtend zueinander.

Die beiden Kupplungsanschlüsse 5a, 5b bilden die Kupplung 5. Der Kupplungsanschluss 5b ragt durch eine Öffnung 6 im Gestell 3. An das durch die Öffnung 6 ragende Ende des Kupplungsanschlusses 5b ist ein Vakuumventil 7 mit Implosion angeschlossen, an das die Saugquelle über einen entsprechenden Saugschlauch angeschlossen ist.

Auf dem dem Kupplungsanschluss 5a zugewandten Ende des Kupplungsanschlusses 5b sitzt eine Buchse 13, die axial in Richtung auf den Kupplungsanschluss 5a über den Kupplungsanschluss 5b vorsteht. Sie ist durch wenigstens einen, im Ausführungsbeispiel durch zwei mit axialem Abstand hintereinander liegende Dichtringe 14 gegen den Kupplungsanschluss 5b abgedichtet. Die beiden Dichtringe 14 liegen in jeweils einer Ringnut 15 in der Innenseite der Buchse 13.

Die Buchse 13 hat eine einer Buchse 10 zugewandte plane Stirnseite 16, die einem Dichtelement 9 mit geringem axialem Abstand gegenüberliegt.

Im überstehenden Endbereich 8 ist die Buchse 13 innenseitig kegelförmig ausgebildet, der sich in Richtung auf den Kupplungsanschluss 5a erweitert. Die kegelförmige Innenwand 13a erstreckt sich vorteilhaft bis in Höhe der Stirnseite des Kupplungsanschlusses 5a. An die kegelförmige Innenwand 13a schließt eine zylindrische Innenwand 13b an, die das freie Ende des Kupplungsanschlusses mit radialem Abstand umgibt. Dadurch wird zwischen den beiden Kupplungsabschnitten 5a, 5b ein Ringspalt 17 gebildet, der die Umgebung mit dem Inneren der Kupplung 5 verbindet.

Auf dem Kupplungsanschluss 5a sitzt die Buchse 10, die in geeigneter Weise auf dem Kupplungsanschluss 5a gehalten ist. Zur Abdichtung der Buchse 10 auf dem Kupplungsanschluss 5a ist wenigstens ein Dichtring 11 vorgesehen, der in einer Ringnut 12 in der Innenseite des Dichtringes 11 angeordnet ist. Im dargestellten Ausführungsbeispiel hat die Buchse 10 zwei mit axialem Abstand hintereinander liegende Ringnuten 12, in denen jeweils ein Dichtring 11 untergebracht ist. Die Dichtringe 11 sind in der Einbaulage elastisch verformt und dichten dadurch die Buchse 10 gegen den Kupplungsanschluss 5a ab.

Nahe dem Kupplungsanschluss 5b ist die Buchse 10 an ihrer Außenseite mit einer Ringnut 10a versehen, in die das ringscheibenförmige Dichtelement 9 eingreift, das als dünner Dichtring ausgebildet ist und aus einem weichen Kunststoff, vorzugsweise EPDM, besteht. Das Dichtelement 9 hat beispielsweise eine Härte von nur etwa 25 bis 40 Shore A. Vorteilhaft hat das Dichtelement 9 rechteckigen Querschnitt (Fig. 3).

Das Dichtelement 9 ragt über den größten Teil seiner radialen Breite aus der Ringnut 10a, die in einem im Außendurchmesser verringerten Endabschnitt der Buchse 10 vorgesehen ist.

Der Gehäuseteil 4b hat einen Kupplungsanschluss 18a, der radial vom Gehäuseteil 4b absteht. Der Kupplungsanschluss 18a ist Teil einer Kupplung 18, über die die Abscheidereinheit 1 mit dem Vorratsbehälter für das zu fördernde Gut leitungsverbunden werden kann.

Die Kupplung 18 hat den weiteren Kupplungsanschluss 18b, der durch eine Öffnung 19 im Gestell 3 ragt und an ihm befestigt ist. An das überstehende Ende des Kupplungsanschlusses 18b wird die entsprechende Förderleitung angeschlossen, über die das zu fördernde Gut vom Vorratsbehälter zur Abscheidereinheit 1 gefördert wird.

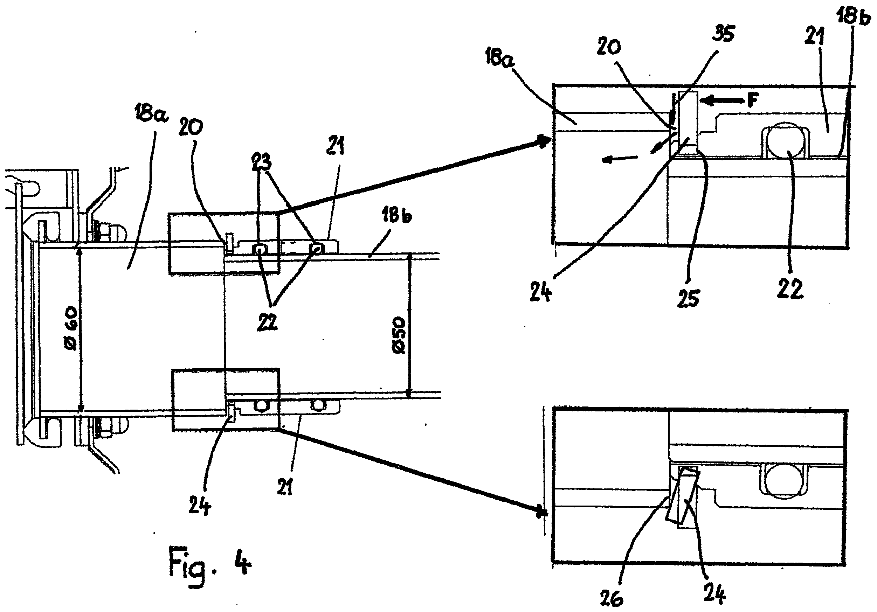

Die beiden rohrförmigen Kupplungsanschlüsse 18a, 18b sind so angeordnet, dass sie, in Radialrichtung gesehen, aneinander anschließen (Fig. 3 und 4). Der Kupplungsanschluss 18a hat einen Innendurchmesser, der größer ist als der Außendurchmesser des Kupplungsanschlusses 18b. Dadurch wird zwischen den beiden Kupplungsanschlüssen 18a, 18b, die achsgleich zueinander liegen, ein Ringspalt 20 gebildet.

Beispielhaft ist in Fig. 4 angegeben, dass der Innendurchmesser des Kupplungsanschlusses 18a 60 mm und der Außendurchmesser des Kupplungsanschlusses 18b 50 mm beträgt. Daher hat der Ringspalt 20 eine Weite von 5 mm.

Auf dem Kupplungsanschluss 18b ist eine Buchse 21 befestigt, die durch wenigstens einen, im Ausführungsbeispiel durch zwei mit axialem Abstand hintereinander liegende Dichtringe 22 gegen den Kupplungsanschluss 18b abgedichtet ist. Ein oder zwei Dichtringe 22 sitzen in jeweils einer Ringnut 23 in der Innenwand der Buchse 21.

In die Buchse 21 ist nahe benachbart zum Kupplungsanschluss 18a ein Dichtelement 24 eingesetzt, das als flacher, ringscheibenförmiger Dichtring ausgebildet ist. Die Buchse 21 ist mit einer Ringnut 25 versehen, die in der Außenseite der Buchse 21 vorgesehen ist und in die das Dichtelement 24 mit seinem radial inneren Rand eingreift.

Das Dichtelement 24 besteht wie das Dichtelement 9 aus einem weichen Kunststoff, vorzugsweise aus EPDM, mit einer Härte von etwa 25 bis 40 Shore A. Vorteilhaft hat das Dichtelement 24 rechteckigen Querschnitt (Fig. 3 und 4). Das Dichtelement 9 steht radial über den Kupplungsanschluss 18a vor.

Die Ringnut 25 ist in einem im Außendurchmesser verringerten Endabschnitt der Buchse 21 vorgesehen. Das Dichtelement 24 ragt über den größten Teil seiner radialen Breite aus der Ringnut 25 und liegt, solange keine Förderung des Gutes stattfindet, mit axialem Abstand einer ebenen Stirnseite 26 des Kupplungsanschlusses 18a gegenüber (Fig. 4).

Die Kupplung 18 kann auch so ausgebildet sein, dass der Kupplungsanschluss 18b in den Kupplungsanschluss 18a ragt.

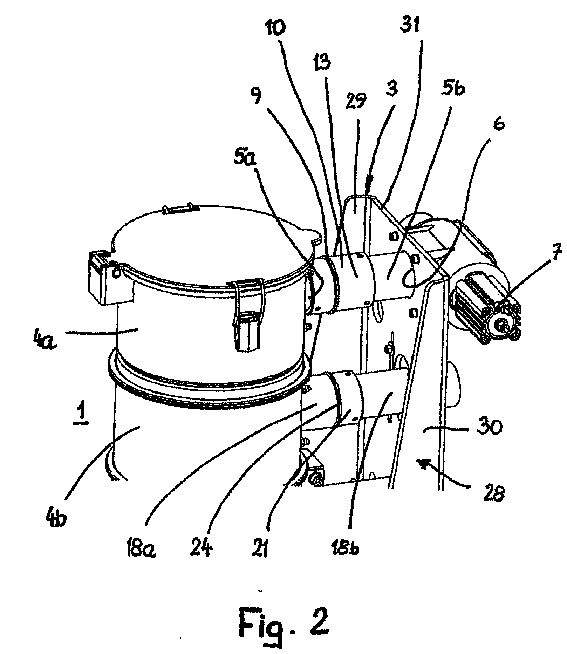

Das Gestell 3 ist im Ausführungsbeispiel als Ständer ausgebildet, der eine Fußplatte 27 aufweist, mit der das Gestell 3 auf einem Untergrund aufsteht. Von der Fußplatte 27 steht ein u-förmiger Ständerteil 28 ab, dessen Seitenwände 29, 30 (Fig. 2) senkrecht von einem Tragteil 31 abstehen. Vorteilhaft nimmt die Breite der Seitenwände 29, 30 von der Fußplatte 27 aus ab, vorzugsweise stetig.

Die Öffnungen 6, 19, durch welche die Kupplungsanschlüsse 5b, 18b ragen, sind im Tragteil 31 vorgesehen.

Vorteilhaft liegen die Kupplungsanschlüsse 5a, 5b; 18a, 18b in Höhenrichtung des Gestelles 3 mit Abstand übereinander.

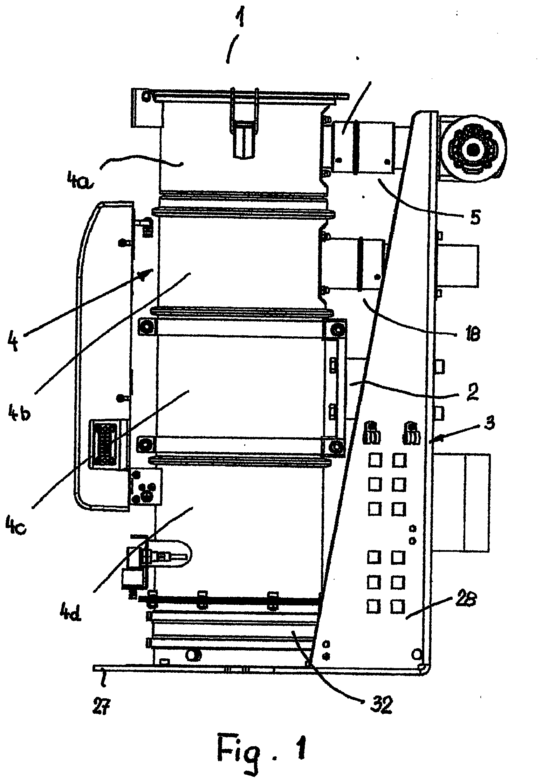

Die Wägezelle 2 ist ebenfalls am Tragteil 31 in bekannter Weise befestigt und liegt mit Abstand unterhalb der beiden Kupplungen 5, 18 (Fig. 1).

Die Abscheidereinheit 1 hängt an der Wägezelle 2 in bekannter Weise.

In der Abscheidereinheit 1 ist ein (nicht dargestellter) Auffangbehälter für das zu fördernde Gut untergebracht. Wird ein Fördervorgang eingeleitet, wird das Gut vom Vorratsbehälter über die Kupplung 18 zugeführt, das in den Auffangbehälter gelangt. Ist die entsprechende Menge an Gut in den Auffangbehälter gelangt, gibt die Wägezelle 2 ein Signal, um den Boden des Auffangbehälters zu öffnen, so dass das Gut nach unten zu einem Auslass 32 der Abscheidereinheit 1 fällt. Von hier aus gelangt das Gut beispielsweise in die (nicht dargestellte) Verarbeitungsmaschine, einen Behälter oder einen Trockentrichter.

Die beiden Dichtelemente 9, 24 dichten, solange kein Fördervorgang stattfindet, die Ringspalte 17, 20 nicht ab. Dadurch ist der Innenraum der Kupplungen 5, 18 mit der Umgebung verbunden. Die Dichtelemente 9, 24 liegen in dieser Ausgangslage in einer Radialebene der Kupplungen 5, 18.

Wird ein Fördervorgang gestartet, dann wird von der an den Anschluss 7 angeschlossenen Saugquelle ein Saugstrom 33 erzeugt (Fig. 3), mit dem das Gut aus dem Vorratsbehälter abgezogen und in Strömungsrichtung 34 der Kupplung 18 zugeführt wird. Innerhalb der Abscheidereinheit 1 erfolgt in bekannter Weise die Trennung der Saugluft vom geförderten Gut.

Die beiden Dichtelemente 9, 24 werden erfindungsgemäß beim Fördervorgang gegen ihre jeweilige plane Dichtfläche 16, 26 gezogen. Dies ist in Fig. 4 für die Kupplung 18 und das Dichtelement 24 dargestellt. In gleicher Weise wird auch das Dichtelement 9 der Kupplung 5 dichtend gegen die Dichtfläche 16 gedrückt. Der Ringspalt 17, 20 ist zunächst offen, so dass zu Beginn des Fördervorganges aufgrund des Unterdruckes in der Kupplung Luft von außen durch den Ringspalt 17, 20 in den Kupplungsanschluss 5a, 18a angesaugt wird. Dies ist in Fig. 4 durch die Strömungspfeile 35 dargestellt. Auf das Dichtelement 24 wirkt die Kraft F, wodurch der radial vorstehende Teil der Dichtelemente 9, 24 elastisch so verformt wird, dass er sich an die axial mit Abstand gegenüberliegende Dichtfläche 13a, 26 dichtend anlegt. Dies ist in Fig. 4 beispielhaft für das Dichtelement 24 dargestellt. Da die Dichtelemente 9, 24 aus elastischem Dichtmaterial, insbesondere aus weichem Kunststoff, bestehen, lassen sich die Dichtelemente sehr einfach so verformen, dass sie in ihre Dichtstellung gelangen. Die Dichtelemente 9, 24 stehen ausreichend weit radial aus den Ringnuten 10a, 25 der Buchsen 10, 21 vor, so dass die Dichtelemente 9, 24 schlagartig in ihre Dichtstellung elastisch umklappen.

Sobald der Fördervorgang beendet ist, klappen die Dichtelemente 9, 24 selbsttätig in ihre den Ringspalt 17, 20 freigebende Lage zurück. Da die Ringspalte 17, 20 zu Beginn des Fördervorganges offen sind und kurzzeitig ein Luftstrom durch die Ringspalte 17, 20 strömt, können im Ringspalt eventuell sich befindliche Granulatkörner, Stäube, Verunreinigungen und dergleichen durch diesen Luftstrom weggesaugt werden. Die Kupplung 5, 18 weist somit einen Selbstreinigungseffekt auf. Beide Kupplungen 5, 18 sind so ausgebildet, dass ihre mit dem Gestell 3 verbundenen Kupplungsanschlüsse 5b, 18b keinen Kontakt mit den der Abscheidereinheit 1 zugeordneten Kupplungsanschlüsse 5a, 18a haben.

Dadurch besteht im Ruhezustand keine Verbindung zwischen den Kupplungen 5, 18 der Abscheidereinheit 1 und dem Gestell 3. Dies hat zur Folge, dass über die Kupplungen 5, 18 keine Kraft auf die Wägezelle 2 wirkt, die das Wiegeergebnis beeinträchtigen könnte.

Im Bereich des Auslasses 32 ist die Abscheidereinheit 1 lediglich mit einem Stofftuch mit dem Gestell 3 verbunden, so dass in diesem Bereich keine Kräfte von der Abscheidereinheit 1 auf die Wägezelle 2 übertragen werden.

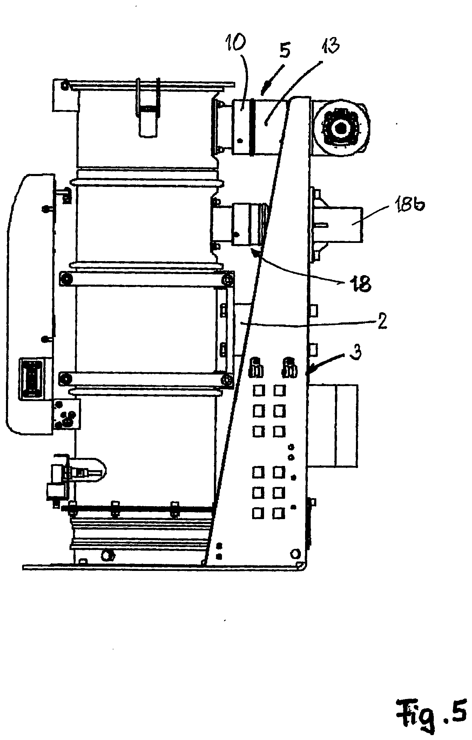

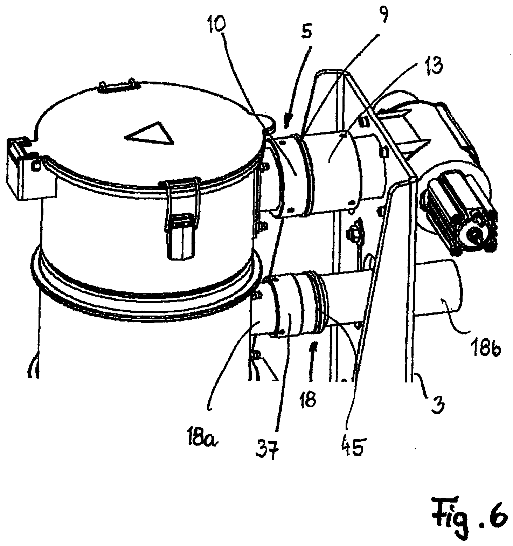

Das Fördergerät gemäß den Fig. 5 bis 8 ist im Wesentlichen gleich ausgebildet wie die vorige Ausführungsform. Im Folgenden werden darum im Wesentlichen nur die Unterschiede zu dieser Ausführungs-form erläutert.

Die Kupplung 5 hat die beiden Buchsen 10, 13, die axial kürzer sind als bei der vorigen Ausführungsform und jeweils nur eine Ringnut 12, 15 aufweisen, in der jeweils ein Dichtring 11, 14 sitzt.

Wie bei der vorigen Ausführungsform haben die beiden Kupplungs-anschlüsse 5a, 5b axialen Abstand voneinander. Der Abstand zwischen den beiden Kupplungsanschlüssen 5a, 5b wird durch die Buchse 13 überdeckt, die axial über den Kupplungsanschluss 5b vorsteht und den Kupplungsanschluss 5a mit radialem Abstand übergreift.

Die beiden Buchsen 10, 13 sind entsprechend der vorigen Ausführungsform axial fest auf den Kupplungsanschlüssen 5a, 5b befestigt, vorzugsweise mit Hilfe von wenigstens einer Senkschraube 35, 36.

Zwischen den beiden Buchsen 10, 13 befindet sich das ringförmige Dichtelement 9, das als Ringscheibe ausgebildet ist und wie bei der vorigen Ausführungsform vorteilhaft rechteckigen Querschnitt hat.

Das Dichtelement 9 kann entsprechend der vorigen Ausführungsform in einer außenseitigen Ringnut der Buchse 10 angeordnet sein.

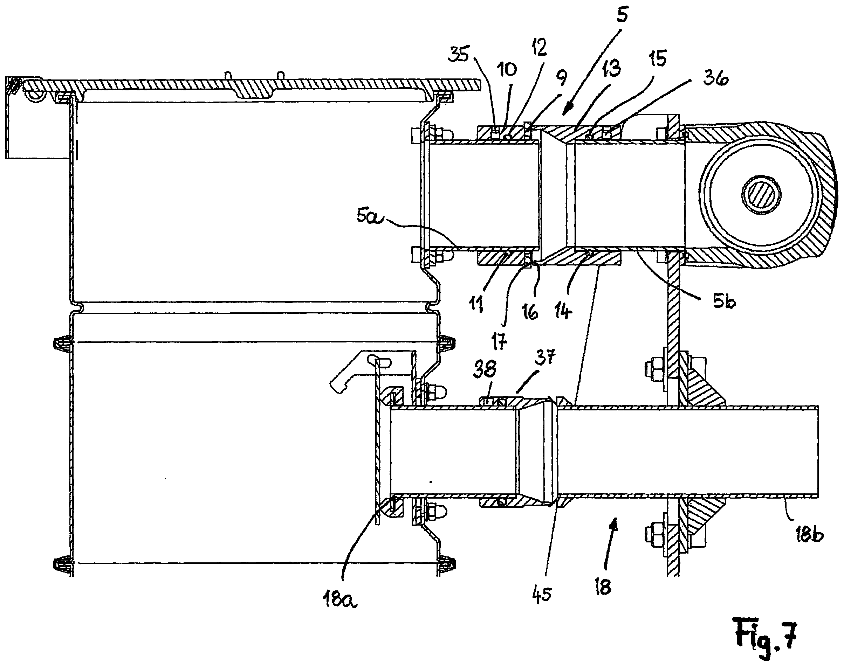

Es ist aber auch möglich, wie aus Fig. 7 hervorgeht, das Dichtelement lose zwischen den beiden Buchsen 10, 13 auf dem Kupplungsanschluss 5a anzuordnen. Es ist lediglich darauf zu achten, dass das Dichtelement 9, solange kein Saugfördervorgang stattfindet, Abstand von der Stirnseite 16 der Buchse 13 hat. Dadurch ist der Ringspalt 17 zwischen dem Dichtelement 9 und der Stirnseite 16 der Buchse 13 offen, solange kein Fördervorgang erfolgt.

Das Dichtelement 9 liegt in der Ausgangsstellung in einer Radialebene der Kupplung 5 beziehungsweise des Kupplungsanschlusses 5a.

Sobald ein Fördervorgang gestartet wird, wird erfindungsgemäß das Dichtelement 9 in der beschriebenen Weise gegen die plane Dichtfläche 16 der Buchse 13 gezogen, wodurch der Ringspalt 17 geschlossen wird und der Innenraum der Kupplung 5 von der Umgebung getrennt ist.

Die Kupplung 18 hat die beiden Kupplungsanschlüsse 18a und 18b. Im Unterschied zur vorigen Ausführungsform haben die beiden Kupplungsanschlüsse 18a, 18b, die axialen Abstand voneinander haben, gleichen Innendurchmesser, vorteilhaft auch gleichen Außendurchmesser.

Auf dem Kupplungsanschluss 18a sitzt axial fest eine Buchse 37, die vorteilhaft mit wenigstens einer Senkschraube 38 auf dem Kupplungsanschluss 18a gehalten ist.

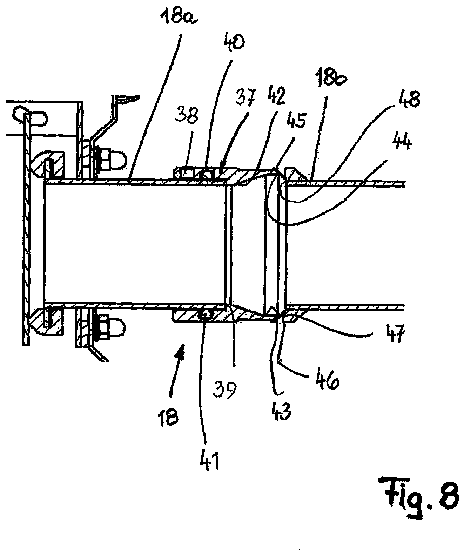

Der Kupplungsanschluss 18a ragt mit seinem Endabschnitt in die Buchse 37 und liegt an deren Innenwand flächig an. Um die Buchse 37 in einfacher Weise in Axialrichtung positionieren zu können, ist die Buchse 37 an ihrer Innenwand mit einem radial nach innen vorstehenden umlaufenden Ringvorsprung 39 versehen (Fig. 8), an dem die Stirnseite des Kupplungsanschlusses 18a zur Anlage kommt und dadurch die Axialposition der Buchse 37 in einfacher Weise festlegt.

Die Buchse 37 ist an ihrer Innenwand mit wenigstens einer Ringnut 40 versehen (Fig.8), in der ein Dichtring 41 untergebracht ist, der dichtend an der Außenwand des Kupplungsanschlusses 18a anliegt. Je nach Länge der Buchse 37 können auch weitere Dichtringe und Ringnuten vorgesehen sein.

Die Buchse 37 ragt axial über den Kupplungsanschluss 18a in Richtung auf den Kupplungsanschluss 18b. Im axial überstehenden Bereich hat die Buchse 37 eine kegelförmige Innenwand 42, die sich etwa vom freien Ende des Kupplungsanschlusses 18a aus erweitert. Nahe dem freien Ende der Buchse 37 geht die kegelförmige Innenwand 42 in eine zylindrische Innenwand 43 über. Der Durchmesser der zylindrischen Innenwand 43 ist größer als der Außendurchmesser des Kupplungs-anschlusses 18b.

Damit ein störungsfreier Durchlauf des zu fördernden Gutes durch die Kupplung 18 sichergestellt ist, hat der Ringvorsprung 39 der Buchse 37 einen Innendurchmesser, der dem Innendurchmesser des Kupplungsanschlusses 18a entspricht. Dadurch tritt am Übergang vom Ringvorsprung 39 zum Kupplungsanschluss 18a kein Sprung auf, an dem Gutteilchen hängen bleiben könnten.

Die Buchse 37 hat eine Stirnseite 44, die axialen Abstand vom Kupplungsabschnitt 18b hat und an der ein Dichtelement 45 dichtend anliegt. Das Dichtelement 45 ist ein dünne Konusscheibe, die an einem Haltering 46 vorgesehen ist, der auf dem Kupplungsanschluss 18b gehalten ist. Der Haltering 46 kann in jeder geeigneten Weise axial fest auf dem Kupplungsanschluss 18b befestigt sein.

Wie Fig. 8 zeigt, steht der Haltering 46 vorteilhaft geringfügig über den Kupplungsanschluss 18b über. Vorteilhaft ist der Haltering 46 einstückig mit dem Dichtelement 45 ausgebildet, das wie das Dichtele-ment 24 der vorigen Ausführungsform aus einem weichen Kunststoff, vorzugsweise EPDM, besteht und beispielsweise eine Härte von nur etwa 25 bis 40 Shore A hat.

Das Dichtelement 45 ist so ausgebildet, dass es sich in Richtung auf die Buchse 37 erweitert.

Der Haltering 46 hat eine ebene Stirnseite 47, die in einer Radialebene des Kupplungsanschlusses 18b liegt und vorteilhaft geringfügig vor der Stirnseite des Kupplungsanschlusses 18b liegt. Das Dichtelement 45 erstreckt sich vom inneren Rand 48 des Halteringes 46 aus. Das Dichtelement 45 beziehungsweise der Haltering 46 sind so auf dem Kupplungsanschluss 18b vorgesehen, dass das Dichtelement 45 nahe seinem dem Kupplungsanschluss 18a zugewandten äußeren Rand mit geringer Anpresskraft an der Stirnseite 44 der Buchse 37 anliegt. Da das Dichtelement 45 aus einem sehr weichen Material besteht und nur mit geringer Anpresskraft an der Buchse 37 anliegt, wirkt sich die Anlage des Dichtelementes 45 an der Buchse 37 auf das Wiegeergebnis der Wägezelle 2 praktisch nicht aus.

Im Unterschied zur vorigen Ausführungsform ist die Kupplung 18 nicht mit einem Ringspalt versehen, sondern das Dichtelement 45 dichtet das Innere der Kupplung 18 stets luftdicht gegen die Umgebung ab.

Solange kein Fördervorgang erfolgt, befindet sich das Dichtelement 9 der Kupplung 5 in der Offenstellung, so dass über den Ringspalt 17 der Innenraum der Kupplung 5 mit der Umgebung verbunden ist. Im Unterschied zur vorigen Ausführungsform dichtet das Dichtelement 45 die Kupplung 18 auch dann ab, wenn keine Förderung erfolgt.

Um einen Fördervorgang zu starten, wird von der an den Anschluss 7 angeschlossenen Saugquelle der Saugstrom 33 (Fig.3) erzeugt, durch den das Gut aus dem Vorratsbehälter abgezogen und in Strömungsrichtung 34 der Kupplung 18 zugeführt wird. In der Abscheidereinheit 1 wird die Saugluft vom Fördergut getrennt.

Aufgrund des Unterdrucks in der Kupplung 5 wird Luft von außen durch den Ringspalt 17 in die Kupplung 5 gesaugt. Durch die auf das Dichtelement 9 wirkende Kraft F (Fig.4) wird das Dichtelement 9 elastisch verformt und legt sich dichtend an die Dichtfläche 16 der Buchse10 an. Da der Ringspalt 17 zu Beginn des Fördervorganges offen ist und kurzzeitig ein Luftstrom durch den Ringspalt 17 strömt, werden in diesem Ringspalt eventuell sich befindende Gutteilchen durch den Luftstrom weggesaugt. Wie bei der vorigen Ausführungsform weist daher die Kupplung 5 einen Selbstreinigungseffekt auf.

## Patentansprüche

1. Fördergerät für den Einsatz im Kunststoffbereich, mit einer Abscheidereinheit (1), die an einer Wägezelle (2) hängt, die an einem Gestell (3) gehalten ist, das über eine erste Kupplung (5) zum Anschluss an wenigstens eine Saugquelle und über eine zweite Kupplung (18) zum Anschluss an wenigstens eine Förderleitung für das zu fördernde Gut mit der Abscheidereinheit (1) verbunden ist, wobei zumindest die erste und/oder die zweite Kupplung (5, 18) einen mit der Abscheidereinheit (1) verbundenen Kupplungsteil (5a, 18a) und einen mit dem Gestell (3) verbundenen Kupplungsteil (5b, 18b) aufweist, wobei beide Kupplungsteile (5a, 5b; 18a, 18b) ohne Berührung zueinander sind, und wobei der Bereich (17, 20) zwischen den beiden Kupplungsteilen (5a, 5b; 18a, 18b) durch wenigstens ein Dichtelement (9, 24, 45) abdichtbar ist,
**dadurch gekennzeichnet, dass** das Dichtelement (9, 24, 45) in einer Freigabe/Ruhestellung Abstand von einer Dichtfläche (16, 26) hat, wodurch zwischen dem Dichtelement und der Dichtfläche ein Durchlass gebildet wird, der den Innenraum der Kupplung mit der Umgebung verbindet, dass das Dichtelement (9, 24, 45) in einer Dichtstellung dichtend an der Dichtfläche (16, 26, 44) anliegt, und dass das Dichtelement (9, 24, 45) bei einem Fördervorgang aus der Freigabe/Ruhe- in die Dichtstellung gelangt.

2. Fördergerät nach Anspruch 1,
**dadurch gekennzeichnet, dass** die Kupplungsteile (5a, 5b; 18a, 18b) beider Kupplungen (15, 18) zylindrische Rohrstücke sind.

3. Fördergerät nach Anspruch 1 oder 2,
**dadurch gekennzeichnet, dass** beide Kupplungsteile (5a, 5b; 18a, 18b) fluchtend zueinander liegen.

4. Fördergerät nach einem der Ansprüche 1 bis 3,
**dadurch gekennzeichnet, dass** beide Kupplungsteile (5a, 5b; 18a, 18b) axialen Abstand voneinander haben, und dass der Abstand durch eine Buchse (13, 37) überbrückt ist, die auf wenigstens einem der Kupplungsteile (5a, 5b; 18a, 18b) vorgesehen ist.

5. Fördergerät nach einem der Ansprüche 1 oder 4,
**dadurch gekennzeichnet, dass** das Dichtelement (9, 24) ein flacher Dichtring ist.

6. Fördergerät nach einem der Ansprüche 1 bis 5,
**dadurch gekennzeichnet, dass** das Dichtelement (9, 24, 45) aus einem weichen Material besteht.

7. Fördergerät nach einem der Ansprüche 1 bis 6,
**dadurch gekennzeichnet, dass** das Dichtelement (9, 24, 45) aus einem weichen Kunststoff mit einer Shorehärte A von etwa 25 bis 40 besteht.

8. Fördergerät nach einem der Ansprüche 1 bis 7,
**dadurch gekennzeichnet, dass** das Dichtelement (9, 24, 45) aus EPDM mit einer Shorehärte A von etwa 25 bis 40 besteht.

9. Fördergerät nach einem der Ansprüche 1 bis 8,
**dadurch gekennzeichnet, dass** das Dichtelement (9, 24) mit seinem radial inneren Rand in eine Ringnut (10a, 25) des dem Abscheiderbehälter (1) bzw. dem Gestell (3) zugeordneten Kupplungsteiles (5a, 18b) eingreift.

10. Fördergerät nach einem der Ansprüche 1 bis 9,
**dadurch gekennzeichnet, dass** die Ringnut (10a, 25) an der Außenseite der Buchse (10, 21) vorgesehen ist, die auf dem Kupplungsteil (5a, 18b) befestigt ist.

11. Fördergerät nach einem der Ansprüche 1 bis 10,
**dadurch gekennzeichnet, dass** das Dichtelement (9, 24) über mehr als seine halbe Breite aus der Ringnut (10a, 25) vorsteht.

12. Fördergerät nach einem der Ansprüche 1 bis 11,
**dadurch gekennzeichnet, dass** das Dichtelement (9, 24) in einer Radialebene des Kupplungsteiles (5a, 18b) liegt.

13. Fördergerät nach einem der Ansprüche 1 bis 12,
**dadurch gekennzeichnet, dass** das Dichtelement (45) als kegelscheibenförmiger Ring ausgebildet ist.

14. Fördergerät nach Anspruch 13,
**dadurch gekennzeichnet, dass** das Dichtelement (45) an einem auf dem einen Kupplungsteil (18b) sitzenden Haltering (46) vorgesehen ist und an einer Dichtfläche (47) einer Buchse (37) dichtend anliegt, die auf dem anderen Kupplungsteil (18a) sitzt und über ihn axial vorsteht.

## Claims

1. Conveying device for use in the area of plastics, with a separator unit (1) hanging on a load cell (2), which is held on a rack (3) con nected with the separator unit (1) via a first coupling (5) for connection to at least one suction source and via a second coupling (18) for connection to at least one conveying line for the material to be conveyed, wherein at least the first and/or the second coupling (5, 18) has a coupling part (5a, 18a) connected with the separator unit (1) and a coupling part (5b, 18b) connected with the rack (3), wherein both coupling parts (5a, 5b; 18a, 18b) do not contact each other, and wherein the area (17, 20) between the two coupling parts (5a, 5b; 18a, 18b) can be sealed off by at least one sealing element (9, 24, 45),
**characterized in that** the sealing element (9, 24, 45) is spaced apart from a sealing surface (16, 26) in a release/idle position, thereby forming a passage between the sealing element and the sealing surface that connects the interior space of the coupling with the environment, that the sealing element (9, 24, 45) tightly abuts against the sealing surface (16, 26, 44) in a sealing position, and that the sealing element (9, 24, 45) gets from the release/idle position into the sealing position during a conveying process.

2. The conveying device according to claim 1,
**characterized in that** the coupling parts (5a, 5b; 18a, 18b) of both couplings (15, 18) are cylindrical pipe sections.

3. The conveying device according to claim 1 or 2,
**characterized in that** both coupling parts (5a, 5b; 18a, 18b) are aligned with each other.

4. The conveying device according to one of claims 1 to 3,
**characterized in that** both coupling parts (5a, 5b; 18a, 18b) are spaced an axial distance apart, and that the distance is bridged by a bushing (13, 37), which is provided on at least one of the coupling parts (5a, 5b; 18a, 18b).

5. The conveying device according to one of claims 1 to 4,
**characterized in that** the sealing element (9, 24) is a flat sealing ring.

6. The conveying device according to one of claims 1 to 5,
**characterized in that** the sealing element (9, 24, 45) consists of a soft material.

7. The conveying device according to one of claims 1 to 6,
**characterized in that** the sealing element (9, 24, 45) consists of a soft plastic with a Shore hardness A of about 25 to 40.

8. The conveying device according to one of claims 1 to 7,
**characterized in that** the sealing element (9, 24, 45) consists of EPDM with a Shore hardness A of about 25 to 40.

9. The conveying device according to one of claims 1 to 8, **characterized in that** the radially inner edge of the sealing element (9, 24) engages into a ring groove (10a, 25) of the coupling part (5a, 18b) allocated to the separator container (1) or the rack (3).

10. The conveying device according to one of claims 1 to 9,
**characterized in that** the ring groove (10a, 25) is provided on the exterior side of the bushing (10, 21), which is fastened on the coupling part (5a, 18b).

11. The conveying device according to one of claims 1 to 10,
**characterized in that** the sealing element (9, 24) protrudes from the ring groove (10a, 25) over more than half of its width.

12. The conveying device according to one of claims 1 to 11,
**characterized in that** the sealing element (9, 24) lies in a radial plane of the coupling part (5a, 18b).

13. The conveying device according to one of claims 1 to 12,
**characterized in that** the sealing element (45) is designed as a conical disk-shaped ring.

14. The conveying device according to claim 13,
**characterized in that** the sealing element (45) is provided on a retaining ring (46) that sits on the one coupling part (18b), and tightly abuts against a sealing surface (47) of a bushing (37) that sits on the other coupling part (18a) and protrudes axially over it.

## Revendications

1. Convoyeur, destiné à l'utilisation dans le domaine des matières plastique, pourvu d'une unité de séparation (1), qui est accrochée sur une cellule de pesage (2), qui est maintenue dans une armature (3), qui par l'intermédiaire d'un premier accouplement (5) destiné au raccordement sur au moins une source d'aspiration et par l'intermédiaire d'un deuxième accouplement (18), destiné au raccordement sur au moins un conduit de transport pour le produit à convoyer est reliée avec l'unité de séparation (1), au moins le premier et/ou le deuxième accouplement (5, 18) comportant une pièce d'accouplement (5a, 18a) reliée avec l'unité de séparation (1) et une pièce d'accouplement (5b, 18b) reliée avec l'armature (3), les deux pièces d'accouplement (5a, 5b ; 18a, 18b) étant sans contact l'une avec l'autre, et l'étanchéité de la zone (17, 20) comprise entre les deux pièces d'accouplement (5a, 5b ; 18a, 18b) étant susceptible d'être assurée par un élément d'étanchéité (9, 24, 45),
**caractérisé en ce que** dans une position de libération/de repos, l'élément d'étanchéité (9, 24, 45) présente un écart par rapport à une surface d'étanchéité (16, 26), suite à quoi, entre l'élément d'étanchéité et la surface d'étanchéité est constitué un passage, qui relie l'espace intérieur de l'accouplement avec l'environnement, **en ce que** dans une position d'étanchéité, l'élément d'étanchéité (9, 24, 45) est adjacent de manière à assurer l'étanchéité à la surface d'étanchéité (16, 26, 44) et **en ce que** lors d'une opération de convoyage, l'élément d'étanchéité (9, 24, 45) passe de la position de libération / de repos dans la position d'étanchéité.

2. Convoyeur selon la revendication 1,
**caractérisé en ce que** les pièces d'accouplement (5a, 5b ; 18a, 18b) des deux accouplements (15, 18) sont des pièces tubulaires cylindriques.

3. Convoyeur selon la revendication 1 ou 2,
**caractérisé en ce que** les deux pièces d'accouplement (5a, 5b ; 18a, 18b) sont situées en alignement l'une par rapport à l'autre.

4. Convoyeur selon l'une quelconque des revendications 1 à 3, **caractérisé en ce que** les deux pièces d'accouplement (5a, 5b ; 18a, 18b) disposent d'un écart axial l'une par rapport à l'autre et **en ce que** l'écart est enjambé par une douille (13, 37) qui est prévue sur au moins l'une des pièces d'accouplement (5a, 5b ; 18a, 18b).

5. Convoyeur selon l'une quelconque des revendications 1 ou 4, **caractérisé en ce que** l'élément d'étanchéité (9, 24) est une bague d'étanchéité plate.

6. Convoyeur selon l'une quelconque des revendications 1 à 5, **caractérisé en ce que** l'élément d'étanchéité (9, 24, 45) est constitué en une matière souple.

7. Convoyeur selon l'une quelconque des revendications 1 à 6, **caractérisé en ce que** l'élément d'étanchéité (9, 24, 45) est constitué en une matière plastique souple d'une dureté Shore A d'environ 25 à 40.

8. Convoyeur selon l'une quelconque des revendications 1 à 7, **caractérisé en ce que** l'élément d'étanchéité (9, 24, 45) est constitué en EPDM d'une dureté Shore A d'environ 25 à 40.

9. Convoyeur selon l'une quelconque des revendications 1 à 8, caractérisé en ce l'élément d'étanchéité (9, 24) s'engage par son bord intérieur radial dans une rainure annulaire (10a, 25) de la pièce d'accouplement (5a, 18b) associée au réservoir de séparation (1) ou à l'armature (3).

10. Convoyeur selon l'une quelconque des revendications 1 à 9, **caractérisé en ce que** la rainure annulaire (10a, 25) est prévue sur la face extérieure de la douille (10, 21), qui est fixée sur la pièce d'accouplement (5a, 18b).

11. Convoyeur selon l'une quelconque des revendications 1 à 10, **caractérisé en ce que** l'élément d'étanchéité (9, 24) déborde sur plus de la moitié de sa largeur hors de la rainure annulaire (10a, 25).

12. Convoyeur selon l'une quelconque des revendications 1 à 11, **caractérisé en ce que** l'élément d'étanchéité (9, 24) se situe dans un plan radial de la pièce d'accouplement (5a, 18b).

13. Convoyeur selon l'une quelconque des revendications 1 à 12, **caractérisé en ce que** l'élément d'étanchéité (45) est conçu en tant qu'une bague en forme de disque conique.

14. Convoyeur selon la revendication 13,
**caractérisé en ce que** l'élément d'étanchéité (45) est prévu sur une bague de maintien (46) reposant sur l'une pièce d'accouplement (18b) et est adjacent de manière à assurer l'étanchéité à une surface d'étanchéité (47) d'une douille (37) qui repose sur l'autre pièce d'accouplement (18a) et qui déborde au-delà de celle-ci en direction axiale.
